# EUROPEAN PATENT APPLICATION

(11) **EP 2 755 113 A2**
(43) Date of publication of application: **16.07.2014**
(21) Application number: 14151258.2
(22) Date of filing: 15.01.2014
(51) Int. Cl.: G06F 3/01

(54) **A system of providing feedback based on an augmented reality environment**

(30) Priority: 15.01.2013 US 201313741826
(71) Applicant: Immersion Corporation, San Jose, CA 95134 (US)
(72) Inventor: Lacroix, Robert, San Jose, CA 95124 (US)
(74) Representative: Beck Greener

(57) **Abstract**

A device may be configured to provide feedback based on an augmented reality environment. The device may comprise, for example, a processor configured to receive a control signal from an augmented reality device and a feedback device configured to provide a feedback based on the received control signal. The augmented reality device may generate an augmented reality environment and may be remote from the device. The control signal received by the device may be representative of an event occurring in the augmented reality environment. The augmented reality environment may include a physical space in which at least one physical object exists and an augmented reality space in which one or more virtual objects that augment the physical object are displayed.

## Description

The present invention relates to a device that is configured to generate feedback based on an event that occurs in an augmented reality environment, an augmented reality device configured to generate an augmented reality environment and a system of providing feedback based on an augmented reality environment.

Augmented reality devices provide an augmented reality environment in which physical objects in a physical space are concurrently displayed with virtual objects in a virtual space. Various augmented reality devices recognize specific codes (e.g., QR codes) disposed on physical objects and display one or more virtual objects in a view that includes the physical objects augmented with the virtual objects based on the specific codes. Other augmented reality devices can recognize specific, known physical objects using image recognition such as by transmitting images to a server that performs the image recognition.

Despite advances in augmented reality systems, the ability to interact with an augmented virtual environment is limited. For example, conventional augmented reality devices typically use speech recognition for providing input in relation to the augmented reality environment. Providing useful feedback to the user is also limited. In addition, recognizing objects in the virtual reality environment may be computationally intensive and reduce usability in many instances.

The disclosure relates to a device that is configured to generate feedback based on an event that occurs in an augmented reality environment, provide input to the augmented reality environment, and be recognized in association with the augmented reality environment. The augmented reality environment may be generated by an augmented reality device communicably coupled to the device.

According to a first aspect of the invention there is provided a device configured to provide feedback based on an augmented reality environment, the device comprising: a processor configured to: receive a control signal from an augmented reality device that generates the augmented reality environment and is remote from the device, the control signal representative of an event occurring in the augmented reality environment; and, a feedback device configured to provide a feedback based on the received control signal.

The device may be configured such that the feedback device comprises a haptic output device configured to provide a haptic effect, a visual device configured to provide a visual feedback, or an audio device configured to provide an audible feedback.

The device may be configured such that the feedback device comprises an actuator configured to generate a haptic effect.

The device may be configured such that the feedback device comprises a non-mechanical haptic output device configured to generate a haptic effect.

The event may comprise an interaction between the device and the augmented reality environment, a confirmation of an action occurring with respect to the augmented reality environment, or a confirmation that the device is recognized by the augmented reality device.

The device may be configured to further comprise: a communication port configured to establish a wireless or wired communication channel with the augmented reality device, wherein the control signal is received via the wireless or wired communication channel.

The device may be configured to further comprise: a position or orientation device configured to provide the augmented reality device with a position, an orientation, or both via the wireless or wired communication channel.

The device may be configured to further comprise: an input component configured to receive an input, wherein the processor is configured to communicate the input to the augmented reality device via the wired or wireless communication port.

The augmented reality environment may comprise an augmented reality space in which one or more virtual objects are displayed, the event comprising an interaction between the device and the one or more virtual objects.

The device may be configured such that the feedback device comprises a visual device configured to provide visual feedback, the visual device configured to generate a visual feedback at the device that coordinates with the one or more virtual objects.

The device may be configured such that the visual feedback at the device coordinates with the one or more virtual objects such that both comprise a similar color or pattern.

The device may be configured to further comprise: an augmented reality symbol disposed on a surface of the device, wherein the augmented reality symbol is used to determine an orientation of the device within the augmented reality environment.

The device may be configured to further comprise: an identifier device configured to generate identifying indicia used by the augmented reality device to identify the device.

The device may be configured such that the identifying indicia comprises an optical signature or a non-visible signature.

The device may be configured such that the device is configured as a ring.

The device may be configured such that the feedback device comprises a light-emitting band disposed about the ring.

According to a second aspect of the present invention there is provided an augmented reality device configured to generate an augmented reality environment comprising an augmented reality space and a physical space, the augmented reality device comprising: a communication port configured to establish a wired or wireless communication channel with a device; an imaging device configured to image the physical space; a processor configured to: generate the augmented reality space coincident with the physical space; recognize at least one physical object in the physical space and augment the at least one physical object with one or more virtual objects in the augmented reality space; determine an event within the augmented reality environment; and communicate a control signal representative of the event to the device via the wired or wireless communication channel, the control signal causing a feedback to be generated at the device.

The augmented reality may be configured such that the processor is configured to recognize the device when the device is moved to within a field of view of the imaging device and within the physical space.

The augmented reality device may be configured such that the control signal is representative of the recognition of the device such that the feedback to be generated at the device indicates the recognition.

The augmented reality device may be configured such that the processor is configured to; receive from the device, a position of the device, an orientation of the device, or both the position of the device and the orientation of the device; and, determine the position of the device, the orientation of the device, or both the position and the orientation of the device within the augmented reality environment based on the received position of the device, the received orientation of the device, or both the received orientation and the received position.

The augmented reality device may be configured such that the processor is configured to position the device within the augmented reality environment without respect to distance between the at least one physical object and the device.

The augmented reality device may be configured such that the augmented reality device is configured as an eyeglass.

The augmented reality environment may be conveyed via a lens of the eyeglass.

According to a third aspect of the present invention there is provided a system of providing feedback based on an augmented reality environment, the system comprising: a device; and, an augmented reality device comprising: a communication port configured to establish a wired or wireless communication channel with the device; an imaging device configured to image the physical space; a processor configured to: generate the augmented reality space coincident with the physical space; recognize at least one physical object in the physical space and augment the at least one physical object with one or more virtual objects in the augmented reality space; determine an event within the augmented reality environment; and, communicate a control signal representative of the event to the device via the wired or wireless communication channel, the control signal causing a feedback to be generated at the device, wherein the device comprises: a feedback device configured to provide a feedback based on the received control signal.

A device may be configured to provide feedback based on an augmented reality environment. The device may comprise, for example, a processor configured to receive a control signal from an augmented reality device and a feedback device configured to provide a feedback based on the received control signal. The augmented reality device may generate an augmented reality environment and may be remote from the device. The control signal received by the device may be representative of an event occurring in the augmented reality environment. The augmented reality environment may include a physical space in which at least one physical object exists and an augmented reality space in which one or more virtual objects that augment the physical object are displayed.

The event may include an interaction between the device and the augmented reality environment, a confirmation of an action occurring with respect to the augmented reality environment, a confirmation that the device is recognized by the augmented reality device, an interaction between the device and one or more virtual objects displayed in the augmented reality space, and/or other occurrence in the augmented reality environment.

The device may comprise, for example, a communication port, a position or orientation device, an input component, and/or other components. The communication port may include an interface through which a communication channel may be maintained with, for example, the augmented reality device. The control signal from the augmented reality device may be received via the communication channel, which may include a wired or a wireless communication channel. The position or orientation device may be configured to provide the augmented reality device with a position, an orientation, or both, via the communication channel. The input component may be configured to receive an input such as, for example, a button press, a gesture, and/or other input. The input may be communicated, by the processor, to the augmented reality device via the communication channel.

In some implementations, the processor of the device may be configured to execute one or more modules, including, for example, a feedback control module, a communication module, and/or other computer program modules. The feedback control module may be configured to receive a control signal and cause the feedback device to provide the feedback. The communication module may be configured to facilitate communication between the device and the augmented reality device.

The feedback control module may be configured to receive a control signal and cause the feedback device to provide the feedback. The control signal may be representative of an event at the augmented reality device. The event may include, for example, one or more virtual objects being displayed in the augmented virtual environment, one or more interactions between the device and the one or more virtual objects, and/or other occurrence related to the augmented reality environment. In some embodiments, the feedback control module may be configured to provide the control signal to the feedback device. In this embodiment, the control signal may be directly applied to the feedback device to cause the feedback. In some embodiments, the feedback control module may be configured to determine a feedback signal based on the received control signal. In these embodiments, the feedback control module may consult a lookup table to determine the feedback signal based on the received control signal.

The communication module may be configured to facilitate communication between the device and the augmented reality device. In some implementations, the communication module may be configured to facilitate communication between the device, the augmented reality device, the server, a handheld device that comprises similar components and functionality as the device, and/or other devices that may be in communication with the device. The communication module may be configured to provide a wired or wireless communication channel for communication between the device, the augmented reality device, the handheld device, the server, and/or other device.

In some implementations, the feedback device may comprise a haptic output device configured to provide haptic feedback in the form of a haptic effect, a visual device configured to provide a visual feedback, an audio device configured to provide an audible feedback, and/or other device that produces feedback. The haptic output device may include an actuator, for example, an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric, electro-active polymers or shape memory alloys, a macro-composite fiber actuator, an electro-static actuator, an electro-tactile actuator, and/or other type of actuator that provides a physical feedback such as a haptic (e.g., vibrotactile) feedback. The haptic output device may include non-mechanical or non-vibratory devices such as those that use electrostatic friction (ESF), ultrasonic surface friction (USF), or those that induce acoustic radiation pressure with an ultrasonic haptic transducer, or those that use a haptic substrate and a flexible or deformable surface, or those that provide projected haptic output such as a puff of air using an air jet, and so on. The visual device may be configured to generate a visual feedback such as visible light at the device. For example, the visual feedback may visually indicate the occurrence of an event in the augmented reality environment.

The feedback device may be configured to receive one or more signals (e.g., the control signal or the feedback signal) from the feedback control module. Based on the one or more signals, the haptic output device, visual device, audio device, and/or other feedback devices may provide feedback via the device.

The device may comprise an identifier device configured to generate identifying indicia. The identifying indicia may be used by the augmented reality device to identify the device. The identifying indicia may comprise a visible optical signature (e.g., an optical signature that is within visible wavelengths of light) or a non-visible signature (e.g., an optical signature that is not within the visible wavelengths of light). In some implementations, an augmented reality symbol may be disposed on a surface of the device. The augmented reality symbol may be used, for example, to determine an orientation of the device within the augmented reality environment, identify the presence of the device in the augmented reality environment, and/or allow other forms of recognition of the device. In some implementations, the device may emit an audible signature, an infrared signature, and/or other signature that may be recognized by the augmented reality device.

In some implementations, the device may be configured as a wearable device such as a ring. In these implementations, the feedback device may comprise a light-emitting band disposed about the ring. The feedback from the light-emitting band may include a color, a pattern, and/or other visual characteristics that may coordinate with one or more virtual objects in the augmented reality environment. The feedback device may comprise one or more haptic output devices spaced apart at the ring.

In some implementations, the device may include a glove, a thimble, ring, and/or other device that can be worn. In these implementations, the feedback device may comprise a light-emitting band disposed at a portion of the device at a fingertip and/or other portion of the device. The feedback device may comprise one or more haptic output devices spaced apart throughout the device. An identifying indicia and/or augmented reality symbol may be disposed on a surface of the device. In some implementations, the device may cover at least a fingertip on a finger of a wearer's hand. An identifying indicia or augmented reality symbol may be disposed on a surface of the device covering the fingertip of the wearer and/or other surface of the device.

In some implementations, a handheld device may comprise the same or similar components and functionality and may interact in a same or similar manner with the augmented reality device as the device. The handheld device may comprise, for example, a stylus, a joystick, a mobile phone, a video game controller, and/or other handheld device that may be communicably coupled to the augmented reality device. In some implementations, both the device and the handheld device may simultaneously interact with the augmented reality device.

An augmented reality ("AR") device may be configured to generate an augmented reality environment comprising both an augmented reality space and a physical space. The AR device may comprise, for example, a communication port, an imaging device, a processor, and/or other components. The communication port may comprise an interface through which a communication channel may be maintained with, for example, the device. An imaging device such as a camera may be configured to image the physical space. In some implementations, the imaging device of the augmented reality device may comprise a camera, an infrared detector, and/or other image recording device. The processor may be configured to generate the augmented reality space coincident with the physical space. The processor may be configured to recognize at least one physical object in the physical space and augment the at least one physical object with one or more virtual objects in the augmented reality space. The processor may be configured to determine an event within the augmented reality environment and communicate a control signal representative of that event to the device via the wired or wireless communication channel. The control signal may cause feedback to be generated at the device.

In some implementations, the processor of the AR device may be configured to execute one or more modules, including, for example, an object recognition module, an object generation module, an event handler module, a control signal generation module, a communication module, and/or other computer program modules. The objection recognition module may be configured to recognize physical objects in the physical space. The object generation module may be configured to generate virtual objects to augment recognized physical objects. The event handler module may be configured to detect whether an event occurs in the augmented reality environment. The control signal generation module may be configured to receive information relating to an event and generate a control signal for transmission to the device. The communication module may be configured to facilitate communication between the augmented reality device and the device.

In some implementations, a system of providing feedback based on an augmented reality environment may comprise the augmented reality device, the device, and/or the handheld device. These and other objects, features, and characteristics of the system and/or method disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

The components of the following figures are illustrated to emphasize the general principles of the present disclosure and are not necessarily drawn to scale. Reference characters designating corresponding components are repeated as necessary throughout the figures for the sake of consistency and clarity.

Embodiments of the present invention will now be described in detail with reference to the accompanying drawings, in which:
FIG. 1 illustrates a block diagram of an exemplary system of providing feedback based on an augmented reality environment;
FIG. 2A illustrates a schematic view of an exemplary device configured as a wearable device such as a ring;
FIG. 2B illustrates a schematic view of an exemplary device configured as a handheld device such as a stylus;
FIG. 3 illustrates a schematic view of an exemplary feedback device;
FIG. 4 illustrates a depiction of an exemplary augmented reality environment;
FIGS. 5A, 5B, and 5C illustrate schematic views of exemplary augmented reality devices;
FIG. 6 illustrates a flowchart of an exemplary process of providing feedback based on an augmented reality environment and
FIG. 7 illustrates a flowchart of an exemplary process of providing feedback based on an augmented reality environment.

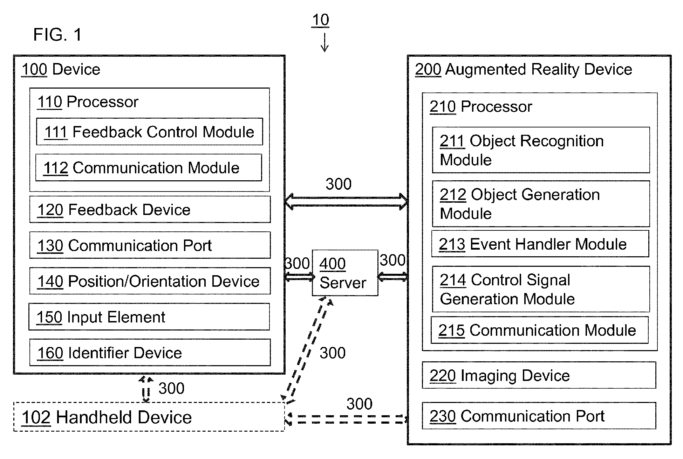

FIG. 1 illustrates a block diagram of an exemplary system 10 of providing feedback based on an augmented reality ("AR") environment. The system 10 may comprise a device 100, an augmented reality ("AR") device 200, a communication channel 300, a server 400, a handheld device 102, and/or other devices that may be in communication with the device 100, the AR device 200, or the server 400.

The device 100 may be configured to provide feedback based on an AR environment. For example, the device 100 may be configured to generate feedback based on an event that occurs in an AR environment, provide input to the AR environment, and be recognized in association with the AR environment. The AR environment may be generated by the AR device 200 communicably coupled to the device 100.

The AR device 200 may generate an AR environment and may be remote from the device 100. The control signal received by the device 100 may be representative of an event occurring in the AR environment. The AR environment may include a physical space in which at least one physical object exists and an augmented reality ("AR") space in which one or more virtual objects that augment the physical object are displayed. As discussed in further detail below, in some implementations, the AR device 200 may be configured in the shape of an eyeglass.

The event may include an interaction between the device 100 and the AR environment, a confirmation of an action occurring with respect to the AR environment, a confirmation that the device 100 is recognized by the AR device 200, an interaction between the device 100 and one or more virtual objects displayed in the AR space, an interaction between a user and the AR environment, and/or other occurrence in the AR environment.

In some implementations, the device 100 may comprise, for example, a processor 110 configured to receive a control signal from an AR device 200, a feedback device 120 configured to provide a feedback based on the received control signal, a communication port 130, a position/orientation device 140, an input component 150, an identifier device 160, and/or other components. As discussed in further detail below, in some implementations, the device 100 may include a glove, a thimble, ring, and/or other device that can be worn. In some implementations, the device 100 may be configured as a handheld device, such as a stylus, a joystick, a mobile phone, a video game controller, and/or other handheld device that may be communicably coupled to the AR device 200. In some implementations, the device 100 and the AR device 200 may be separate devices in a single physical device or integrated in a single physical device.

In some implementations, the processor 110 of the device 100 may be configured to execute one or more modules, including, for example, a feedback control module 111, a communication module 112, and/or other computer program modules of the device 100. The feedback control module 111 may be configured to receive a control signal and cause the feedback device 120 to provide feedback. The communication module 112 may be configured to facilitate communication between the device 100 and the AR device 200.

The feedback control module 111 may be configured to receive a control signal (e.g., from the AR device 200) and cause the feedback device 120 to provide the feedback via the device 100. The control signal may be representative of an event at the AR device 200. The event may include, for example, one or more virtual objects being displayed in the augmented virtual environment, one or more interactions between the device 100 and the one or more virtual objects, and/or other occurrence related to the AR environment. In some embodiments, the feedback control module 111 may be configured to provide the control signal to the feedback device 120. In this embodiment, the control signal may be directly applied to the feedback device 120 to cause the feedback. In some embodiments, the feedback control module 111 may be configured to determine a feedback response based on the received control signal. In these embodiments, the feedback control module 111 may consult a lookup table to determine the feedback response based on the received control signal. The feedback response may comprise one or more types of feedback and one or more feedback signals of the indicated feedback types to be generated based on the received control signal. The feedback control module 111 may be configured to generate the indicated feedback signals of the feedback response and transmit the feedback signals to the respective feedback devices 120 to which the signals correspond.

In some implementations, the feedback control module 111 may consult a lookup table of the device 100 to determine which types of feedback and which feedback signals to include in the feedback response based on the received control signal. The feedback response may include a single feedback signal, a plurality of feedback signals for a single feedback device 120, a plurality of feedback signals for a plurality of feedback devices 120, a pattern of feedback signals for one or more feedback devices 120, and/or other types of feedback response. In some implementations, the type of feedback response may indicate the type of event represented by the control signal. For example, a feedback response comprising a single signal may indicate that the event represents the recognition of the device 100 in the AR environment. A feedback response comprising a pattern of signals may indicate that the event represents an interaction between the device 100 and the AR environment. The indications associated with the different types of feedback responses are not limited to the described examples.

In some implementations, the lookup table may store associations between a plurality of control signals and a plurality of feedback responses. For example, when a control signal comprises information indicating that an event occurred, the lookup table may store a feedback response associated with that control signal. When a control signal comprises information indicating that a type of event occurred, the lookup table may store one or more different feedback responses for one or more types of event that may be indicated by the information of the control signal. When a control signal comprises information indicating that virtual object(s) were displayed in the augmented virtual environment, the lookup table may store a different feedback response for different virtual objects that may be displayed in the augmented virtual environment. For example, the feedback response may coordinate with one or more of the virtual objects indicated in the signal, such that the feedback response corresponds to one or more characteristics of the one or more virtual objects indicated in the signal. The feedback may comprise a color, a shape, a pattern, a number of feedback signals, and/or a characteristic that is similar to the virtual objects indicated. When a control signal comprises information indicating an interaction between the device 100 and one or more virtual objects, the lookup table may store a different feedback response for different interactions that may occur between the device 100 and the AR environment. In some implementations, the feedback control module 111 may retrieve a feedback response from a server 400 that is configured to store a lookup table comprising a plurality of control signals and associated feedback responses.

The communication module 112 may be configured to facilitate communication between the device 100 and the AR device 200. In some implementations, the communication module 112 may be configured to facilitate communication between the device 100, the AR device 200, the server 400, the handheld device 102, which may comprise similar components and functionality as the device 100, and/or other devices that may be in communication with the device 100. The communication module 112 may be configured to provide a wired or wireless communication channel 300 for communication between the device 100, the AR device 200, the handheld device 102, the server 400, and/or other device in communication with the device 100.

The feedback device 120 may comprise one or more haptic output devices configured to provide haptic feedback the form of a haptic effect, one or more visual devices configured to provide a visual feedback, one or more audio devices configured to provide an audible feedback, and/or other device that produces feedback. The haptic output device may include an actuator, for example, an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric, electro-active polymers or shape memory alloys, a macro-composite fiber actuator, an electro-static actuator, an electro-tactile actuator, and/or other type of actuator that provides a physical feedback such as a haptic (e.g., vibrotactile) feedback. The haptic output device may include non-mechanical or non-vibratory devices such as those that use electrostatic friction (ESF), ultrasonic surface friction (USF), or those that induce acoustic radiation pressure with an ultrasonic haptic transducer, or those that use a haptic substrate and a flexible or deformable surface, or those that provide projected haptic output such as a puff of air using an air jet, and so on. The visual device may be configured to generate a visual feedback such as visible light at the device 100. For example, the visual feedback may visually indicate the occurrence of an event in the AR environment.

The feedback device 120 may be configured to receive one or more signals (e.g., the control signal or the feedback signal) from the feedback control module 111. Based on the one or more signals, a haptic output device, visual device, audio device, and/or other feedback devices 120 may provide feedback via the device 100.

The communication port 130 may include an interface through which a communication channel 300 may be maintained with, for example, the AR device 200. The control signal from the AR device 200 may be received via the communication channel 300, which may include a wired or a wireless communication channel.

The position/orientation device 140 may be configured to provide the AR device 200 with a position, an orientation, or both, via the communication channel 300. For example, the position/orientation device 140 may comprise a gyroscope, a geospatial positioning device, a compass, and/or other orienting or positioning devices.

The input component 150 may be configured to receive an input such as, for example, a button press, a gesture, and/or other input. The input may be communicated, by the processor 110, to the AR device 200 via the communication channel 300. For example, the input component 150 may include a touch pad, a touch screen, a mechanical button, a switch, and/or other input component that can receive an input.

The identifier device 160 may be configured to generate identifying indicia for the device 100. The identifying indicia may be used by the AR device 200 to identify the device 100. The identifying indicia may comprise a visible optical signature (e.g., an optical signature that is within visible wavelengths of light) or a non-visible signature (e.g., an optical signature that is not within the visible wavelengths of light). In some implementations, the feedback device 120 may generate the identifying indicia such as by generating an optical signature.

In some implementations, an augmented reality ("AR") symbol may be disposed on a surface of the device 100. The AR symbol may be used, for example, to determine an orientation of the device 100 within the AR environment, identify the presence of the device 100 in the AR environment, and/or allow other forms of recognition of the device 100. In some implementations, the device 100 may emit an audible signature, an infrared signature, and/or other signature that may be recognized by the AR device 200.

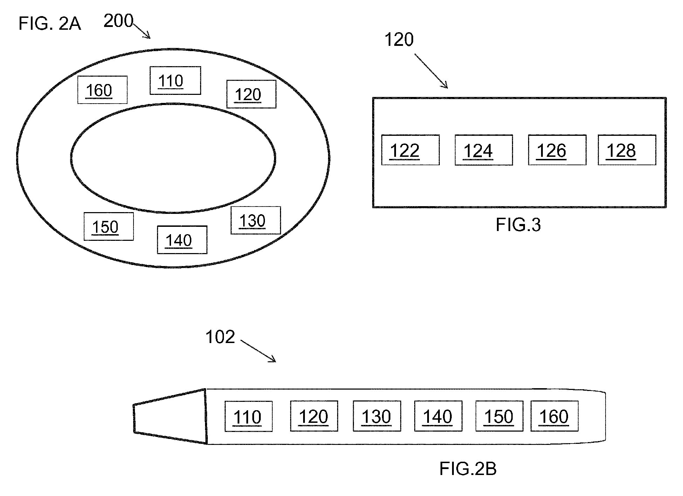

In some implementations, and as shown in FIG. 2A, the device 100 may be configured as a wearable device such as a ring 200. In some implementations, the device 100 may include a wearable device such as a glove, a thimble, and/or other device 100 that can be worn. The feedback device 120 may comprise one or more devices. The one or more devices may be disposed at one or more portions of the device 100. The identifier device 160 may comprise an identifying indicia and/or AR symbol that may be disposed on a surface of the device 100 covering the fingertip of the wearer and/or other surface of the device 100. In some implementations, the identifier device 160 may generate the identifying indicia and/or AR symbol. In some implementations, the device 100 may cover at least a fingernail on a finger of a wearer's hand. An identifying indicia or AR symbol may be disposed on a surface of the device 100 covering the fingernail of the wearer and/or other surface of the device 100.

As shown in FIG. 2B, in some implementations, the device 100 may be configured as the handheld device 102. Handheld device 102 may comprise the same or similar components and functionality and may interact in a same or similar manner with the AR device 200 as the device 100. The handheld device 102 may comprise, for example, a stylus, a joystick, a mobile phone, a video game controller, and/or other handheld device 102 that may be communicably coupled to the AR device 200. In some implementations, both the device 100 and the handheld device 102 may simultaneously interact with the AR device 200.

As shown in FIG. 3, the feedback device 120 of the device 100 may comprise one or more devices. In some implementations, the one or more devices may be spaced apart at the device 100. The feedback device 120 may comprise, for example, one or more haptic output devices 122 configured to provide one or more haptic effects, one or more visual devices 124 configured to provide a visual feedback, one or more audio devices 126 configured to provide an audible feedback, a light-emitting band 128, and/or other device that produces feedback.

The haptic output device 122 may include an actuator, for example, an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric, electro-active polymers or shape memory alloys, a macro-composite fiber, an electro-static actuator, an electro-tactile actuator, and/or other type of actuator that provides a physical feedback such as a haptic (e.g., vibrotactile) feedback. The haptic output device may include non-mechanical or non-vibratory devices such as those that use electrostatic friction (ESF), ultrasonic surface friction (USF), or those that induce acoustic radiation pressure with an ultrasonic haptic transducer, or those that use a haptic substrate and a flexible or deformable surface, or those that provide projected haptic output such as a puff of air using an air jet, and so on. In some implementations, one or more haptic output devices 122 may be spaced apart throughout the device 100.

The visual device 124 may be configured to generate a visual feedback such as visible light at the device 100. For example, the visual feedback may visually indicate the occurrence of an event in the AR environment.

The audio device 126 may be configured to generate audio feedback such as one or more sounds at the device 100. For example, the audio feedback may audibly indicate the occurrence of an event in the AR environment.

The light-emitting band 128 may be configured to generate a light-emitting band emanating from and/or around the device 100. The light emitted via the band 128 may include a color, a pattern, and/or other visual characteristics. The visual characteristics may coordinate with one or more virtual objects in the AR environment.

Returning back to FIG. 1, an AR device 200 may be configured to generate an AR environment comprising both an AR space and a physical space. The AR device 200 may comprise, for example, a processor 210, an imaging device 200, a communication port 230, and/or other components. The processor 210 may be configured to generate the AR space coincident with the physical space. The processor 210 may be configured to recognize at least one physical object in the physical space and augment the at least one physical object with one or more virtual objects in the AR space. The processor 210 may be configured to determine an event within the AR environment and communicate a control signal representative of that event to the device 100 via the wired or wireless communication channel 300. The control signal may cause feedback to be generated at the device 100. The imaging device 220 may be configured to image the physical space. In some implementations, the imaging device 220 may comprise one or more cameras, an infrared detector, a video camera, and/or other image recording device. The communication port 230 may comprise an interface through which a communication channel 300 may be maintained with, for example, the device 100.

In some implementations, the processor 210 may be configured to execute one or more modules, including, for example, an object recognition module 211, an object generation module 212, an event handler module 213, a control signal generation module 214, a communication module 215, and/or other computer program modules. The object recognition module 211 may be configured to recognize physical objects in the physical space. The object generation module 212 may be configured to generate virtual objects to augment recognized physical objects. The event handler module 213 may be configured to detect whether an event occurs in the AR environment. The control signal generation module 214 may be configured to receive information relating to an event and generate a control signal for transmission to the device 100. The communication module 215 may be configured to facilitate communication between the AR device 200 and the device 100.

In some implementations, the object recognition module 211 may be configured to recognize objects in a physical space. The object recognition module 211 may communicate with the imaging device 220 and a storage of the AR device 200 to recognize an object in the physical space. For example, the object recognition module 211 may receive visual data captured from the imaging device 220 and may process the visual data to determine whether one or more objects exist in the captured visual data. The object recognition module 211 may compare the captured objects that exist in the visual data with objects stored in the storage.

For example, the object recognition module 211 may compare the pixels of a captured object with the pixels of a stored object in the storage according to known techniques. When a threshold percentage of pixels (e.g., 80%, 90%, 100%, and/or other percentages) of the captured object match the pixels of a stored object, the object recognition module 211 may determine that the captured object has been recognized as the stored object. In some implementations, the threshold percentage may depend upon a resolution of the imaging device 220.

The object recognition module 211 may obtain information relating to the stored object and transmit the information relating to the stored object and the information relating to the captured object to the object generation module 212. The information transmitted to the object generation module 212 may include, for example, image data for the stored object, a type of the stored object, the location of the captured object in the physical space, a proximity of the captured object to other physical objects, context information relating to the stored object, context information relating to the captured object, and/or other data associated with the stored object or the captured object. In some implementations, the object recognition module 211 may transmit the information relating to the stored object and the information relating to the captured object to one or more of the event handler module 213, the control signal generation module 214, and/or other modules of the processor 210.

In some implementations, when the captured object does not match a stored object, the object recognition module 211 may transmit data relating to the captured object to the server 400 such that the server 400 can perform object recognition. When the server 400 recognizes the captured object, the server 400 may communicate information relating to a stored object that matches the captured object to the object recognition module 211. The object may transmit the information relating to the stored object from the server 400 and the information relating to the captured object to the object generation module 212. When the server 400 does not recognize the captured object, the server 400 may communicate an indication that no match was found.

In some implementations, the object generation module 212 may receive information relating to a physical object from the object recognition module 211 and may generate one or more virtual objects to augment the physical object in the AR environment. The object generation module 212 may access the storage to determine whether one or more virtual objects are associated with the physical object. When no virtual objects are associated with the physical object, the object generation module 212 may communicate with the server 400 to determine whether a storage of the server 400 has stored one or more associations between the one or more physical objects and one or more virtual objects. When an association is found in the storage of the server 400, the server 400 may communicate, to the object generation module 212, data related to the associated virtual objects.

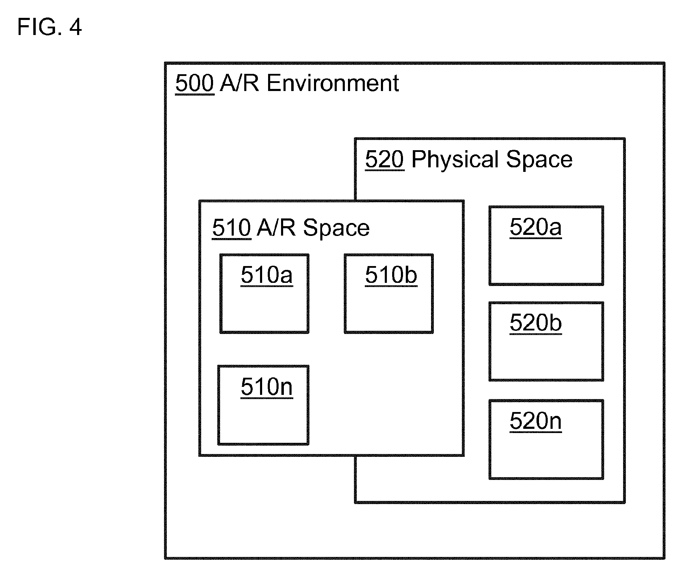

When a virtual object is associated with a physical object identified in the information received from the object recognition module 211, the object generation module 212 may generate an AR space coincident with the physical space. FIG. 4 illustrates a block diagram of an exemplary AR environment 500. The AR environment 500 comprises a physical space 520 comprising one or more physical objects 520a, 520b, ..., 520n and an AR space 510 comprising one or more virtual objects 510a, 510b, ..., 510n that augment one or more physical objects 520a, 520b, ..., 520n in the physical space 520.

In some implementations, the object generation module 212 may augment a physical object 520n with one or more virtual objects 510a, 510b, ..., 510n in the AR space 510. For example, the object generation module 212 may display the AR space 510 (and one or more virtual objects 510a, 510b, ..., 510n) via a display surface of the AR device 200. In some implementations, the AR space 510 and one or more virtual objects 510a, 510b, ..., 510n displayed may be displayed in a three-dimensional manner via the display surface of the AR device 200.

The AR environment 500 displayed via the display of the AR device 200 may include the physical space 520 and an AR space 510. In some embodiments, the physical space 520 may be imaged by the imaging device 220 and displayed via the display. In some embodiments, the physical space 520 may simply be viewed through the display, such as in embodiments where the display is configured as an at least partially transparent display (e.g., a lens) through which the physical space 520 may be viewed. Whichever embodiment to display the physical space 520 is used, one or more virtual objects 510a, 510b, ... 510n may be displayed coincident with or in association with one or more physical objects 520a, 520b, ... 520n that exist in the physical space 520, thereby augmenting the one or more physical objects 520a, 520b, ... 520n in the AR environment 500. A single virtual object 510a may augment a single physical object 520a or a plurality of physical objects 520a, 520b, ... 520n. A plurality of virtual objects 510a, 510b, ... 510n may augment a single physical object 520a or a plurality of physical objects 520a, 520b, ... 520n. The number and types of virtual objects 510a, 510b, ... 510n that augment physical objects 520a, 520b, ... 520n that exist in the physical space 520 is not limited to the examples described.

In some implementations, the event handler module 213 may be configured to detect whether an event occurs in the AR environment. The event handler module 213 may receive data from the imaging device 220, the object recognition module 211, the object generation module 212, the storage, and/or other modules or devices of the AR device 200. The storage of the AR device 200 may store data related to one or more events which the AR device 200 may recognize. For example, the storage of the AR device 200 may store data related to events including, for example, an interaction between the device 100 and the AR environment, a confirmation of an action occurring with respect to the AR environment, a confirmation that the device 100 is recognized by the AR device 200, an interaction between the device 100 and one or more virtual objects displayed in the AR space 510, a generation of a specific type of virtual object to augment a physical object, a recognition of the device 100, a recognition of the handheld device 102, an interaction between a user and the AR environment, and/or other occurrence related to the AR environment.

In some implementations, the event handler module 213 may receive visual data from the imaging device 220, information relating to captured objects in the visual data from the object recognition module 211, information relating to virtual objects generated by the object generation module 212, and/or other information related to the AR environment. The event handler module 213 may compare the received information to data related to events stored in the storage to determine whether the information (or a portion of the information) is associated with an event. When the received information is associated with an event, the event handler module 213 may transmit event data including the received information and data relating to the associated event to the control signal generation module 214.

In some implementations, the event handler module 213 may receive data from the processor indicating that an interaction occurred between the device 100 and the AR environment, one or more virtual objects in the AR environment changed, input was received from the device 100, input received from the device 100 was processed by the AR device 200, an interaction occurred between a user and the AR environment, and/or other processing was performed by the AR device 200. In some implementations, the event handler module 213 may compare the data received from the processor 210 with data stored in the storage to determine whether the data is associated with an event. When some or all of received information is associated with an event stored in the storage, the event handler module 213 may transmit event data including the received information and data relating to the associated event to the control signal generation module 214.

In some implementations, when the received information is not associated with an event stored in the storage, the event handler module 213 may transmit event data including the received information to the server 400 such that the server 400 can perform event handling. When some or all of received information is associated with an event stored in the storage of the server 400, the server 400 may communicate information relating to the associated event to the event handler module 213. The event handler module 213 may transmit event data including the received information and data relating to the associated event to the control signal generation module 214. When the received information is not associated with an event stored in the storage of the server 400, the server 400 may communicate an indication that no match was found.

In some implementations, the control signal generation module 214 may be configured to receive the event data from the event handler module 213 and generate a control signal based on the event data for transmission to the device 100. The storage of the AR device 200 may include a lookup table that associates a plurality of events and a respective plurality of control signals. Based on the event data received from the event handler module 213, the control signal generation module 214 may generate a control signal for transmission to the device 100. For example, the control signal generation module 214 may compare the received event data to the data stored at the storage. When some or all of the event data matches an event stored in the storage, the control signal generation module 214 may generate a control signal related to the control signal associated with the matched event. When the event data does not match an event stored in the storage, the control signal generation module 214 may communicate the event data to the server 400 to determine whether a storage of the server has stored a control signal associated with some or all of the event data. The control signal may comprise, for example, information indicating that an event occurred, information indicating that a specific type of event occurred, information indicating one or more virtual objects have been/are displayed in the augmented virtual environment, information indicating one or more interactions between the device 100 and the one or more virtual objects, and/or other information relating to the event in the AR environment.

The communication module 215 may be configured to facilitate communication between the AR device 200 and the device 100. In some implementations, the communication module 215 may be configured to facilitate communication between the AR device 200, the device 100, the server 400, the handheld device 102, and/or other devices that may be in communication with the AR device 200. The communication module 215 may be configured to provide a wired or wireless communication channel 300 for communication between the AR device 200, the device 100, and/or the handheld device 102. The communication module 215 may be configured to provide communication between the AR device 200, the device 100, the handheld device 102, the server, and/or other device via the wired or wireless communication channel 300 or via a separate communication channel. The communication module 215 may be configured to communicate the control signal generated by the control signal generation module 214 to the device 100 and/or the handheld device 102 via a wired or wireless communication channel 300.

In some implementations, the processor 210 of the AR device 200 may be configured to recognize the device 100 when the device 100 is moved within a field of view of the imaging device 220 and/or within the physical space 520 of the AR environment 500. For example, the object recognition module 211 of the AR device 200 may be configured to recognize the device 100 by comparing image data from the imaging device 220 with image data stored in the storage. The storage of the AR device 200 may include image data corresponding to the device 100. The storage may include image data corresponding to one or more indicia that may be disposed on the device 100. The indicia may comprise a product code, a QR code, an image associated with the device 100, and/or other image used to identify the device 100. The processor 210 of the AR device 200 may be configured to recognize an audible signature, an infrared signature, and/or other signature generated by the device 100. In these implementations, the control signal generation module 214 may generate a control signal that may be representative of the recognition of the device 100 such that the feedback generated at the device 100 indicates the recognition.

In some implementations, the processor 210 may be configured to receive a position of the device 100 and/or an orientation of the device 100 from the device 100. The position and/or orientation of the device 100 may be communicated via the communication channel 300 between the device 100 and the AR device 200. The processor 210 may be configured to determine the position of the device 100 and/or the orientation of the device 100 within the AR environment 500 based on the received position and/or orientation. In some implementations, a position indicator image and/or orientation indicator image may be disposed on the device 100. The object recognition module 211 may recognize the position indicator image and/or the orientation indicator image when recognizing that the wearable object 100 is within the view of the imaging device and/or within the physical space 520 of the AR environment 500. The position indicator image and/or the orientation indicator image data may be processed by the object recognition module 211, the event handler module 213, and/or other modules of the AR device 200 to determine a position and/or an orientation of the device 100 within the AR environment 500. In some implementations, the processor 210 may be configured to position the device 100 within the AR environment 500 without respect to a distance between a physical object and the device 100.

The processor 210 may be configured to receive input from the device 100. For example, the processor 210 may receive data from the device 100 related to input that was received via the input component 150. The input received via the input component 150 may comprise, for example, a button press, a gesture, and/or other input. The processor 210 of the AR device 200 may process the received data and perform functionality based on the processing. For example, the processor 210 may add, delete, change, and/or otherwise modify one or more virtual objects 510a, 510b, ..., 510n in the AR environment 500. The processor 210 may send data to the device 100 based on the processing. The processor 210 may perform other functionality based on the processing. In some implementations, the processor may receive input from the device 100 that includes identifying indicia for the device 100 and an indication that the input comprises the identifying indicia. The AR device 200 may store the identifying indicia and associate the identifying indicia with the device 100.

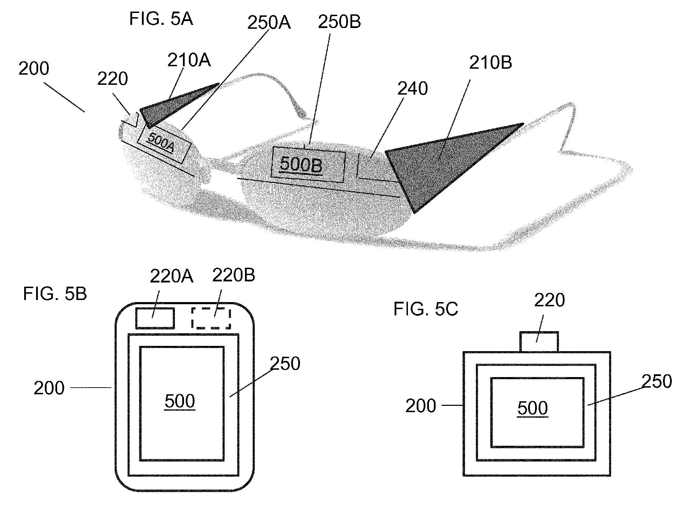

As shown in FIG. 5A, in some implementations, the AR device 200 may be configured in the shape of an eyeglass. For example, the AR device 200 may be configured to display the AR environment 500 (or AR environments 500A, 500B) via one or both lenses 250 of the eyeglass. Components of the AR device 200 (e.g., the imaging device 220, wireless transceiver 240, processor, etc.) may be disposed at various locations of the eyeglass. The following are merely for illustrative purposes and are non-limiting examples. A portion of the frame near one of the lenses 250A (or a portion of the lens 250A) may comprise the imaging device 220. A portion of the frame near the other lens 250B (or a portion of the other lens 250B) may comprise a wireless transceiver 240 that may comprise a communication port. The eyeglass arm 210 (including the portion of the eyeglass frame extending from the lens to the ear) may comprise the processor, the communication port, and/or other components of the AR device 200. In some implementations, the eyeglass arms 210A, 210B may comprise one or more of the processor, the communication port, and/or other components of the AR device 200. Other configurations may be used as well. As shown in FIG. 5B, in some implementations, the AR device 200 may be configured as a mobile phone such as a personal digital assistant, smart phone, and/or other mobile phone. The imaging device 220 may include one or more cameras (e.g., a front facing camera 220A, a back facing camera 220B, and/or other camera of the mobile phone). The processor of the mobile phone may comprise the components and functionality of the processor of the AR device 200. The communication components and functionality of the phone (e.g., one or more ports, a wireless transceiver, one or more antennas, processing functionality to facilitate communication with other devices, and/or other communication components and functionality) may comprise the communication port and communication module of the AR device 200. The display of the mobile device may be configured to display the AR environment 500.

In some implementations, the AR device 200 may be configured as a computing device, such as a laptop, desktop computer, tablet, and/or other computing device. One or more imaging devices 220A, 220B may include a front facing camera, a back facing camera, a webcam communicably coupled to the computing device, and/or other imaging device. The processor of the computing device may comprise the components and functionality of the processor of the AR device 200. The communication components and functionality of the computing device (e.g., one or more ports, a wireless transceiver, one or more antennas, processing functionality to facilitate communication with other devices, and/or other communication components and functionality) may comprise the communication port and communication module of the AR device 200. The display of the computing device may be configured to display the AR environment 500.

As shown in FIG. 5C, in some implementations, the AR device 200 may comprise a television, video game system, and/or other device for displaying moving images. One or more imaging devices 220 may include a front facing camera, an object sensor, a webcam communicably coupled to the computing device, and/or other imaging device. The processor of the device may comprise the components and functionality of the processor of the AR device 200. The communication components and functionality of the device (e.g., one or more ports, a wireless transceiver, one or more antennas, processing functionality to facilitate communication with other devices, and/or other communication components and functionality) may comprise the communication port and communication module of the AR device 200. The display 250 of the device may be configured to display the AR environment 500.

Referring back to FIG. 1, in some implementations, the server 400 may be configured to communicate with one or more of the device 100, the AR device 200, the handheld device 102, and/or other devices in communication with the server 400. In some implementations, server 400 may comprise a processor, a storage, and a communication port.

The processor of the server 400 may be configured to receive data, recognize objects, handle events, send data, and/or provide other functionality. In some implementations, the server 400 may be configured to receive, from the processor 110 of the device 100, a control signal. The storage of the server 400 may comprise a lookup table that may be configured in a manner similar or the same as the lookup table of the device 100 that comprises a plurality of control signals and a plurality of feedback responses. When the lookup table includes an entry relating to the control signal, the server 400 may communicate information including a feedback response to the feedback control module 111. When the lookup table of the server 400 does not include an entry relating to the control signal, the server 400 may communicate an indication that no match was found for the control signal to the feedback control module 111. In some implementations, the server 400 may perform image processing and/or object recognition relating to data received from the device 100.

In some implementations, the server 400 may receive data related to an object captured by the imaging device 220 of the AR device 200. The processor of the server 400 may perform object recognition related to the captured object. The storage of the server 400 may comprise a lookup table that comprises one or more physical objects. The server 400 may determine whether the lookup table comprises an entry related to the object recognized from the received data. When the lookup table comprises an entry related to the recognized object, the server 400 may communicate information relating to a stored object that matches the recognized object to the object recognition module 211. When the server 400 does not recognize the recognized object, the server 400 may communicate an indication that no match was found to the object recognition module 211.

In some implementations, the server 400 may receive data related to a physical object recognized by the object recognition module 211 of the processor 200 of the AR device 200. The processor of the server 400 may determine whether the storage of the server 400 has stored an association between the physical object and one or more virtual objects. In some implementations, the storage of the server 400 may comprise a lookup table that comprises physical objects, virtual objects, and one or more correlations between one or more physical object and one or more virtual objects. When an association is found in the storage of the server 400, the server 400 may communicate, to the object generation module 212, data related to the associated virtual objects. When no association is found in the storage of the server 400, the server 400 may communicate that no association has been found.

In some implementations, the server 400 may be configured to receive event data from the event handler module 213 of the processor 200 of the AR device 200. The storage of the server 400 may include a lookup table that associates a plurality of events and a respective plurality of control signals. When some or all of the event data matches an event stored in the storage of the server 400, the processor of the server 400 may communicate the event data related to the event to the event handler module 213. When the event data does not match an event stored in the storage, the processor of the server 400 may communicate that no match was found to the AR device 200.

The communication port of the server 400 may include an interface through which a communication channel 300 may be maintained with, for example, the device 100, the handheld device 102, the AR device 200, and/or other device in communication with the server 400. Data and/or signals may be received via the communication channel 300, and/or other communication channel through which the server 400 receives data and/or signals.

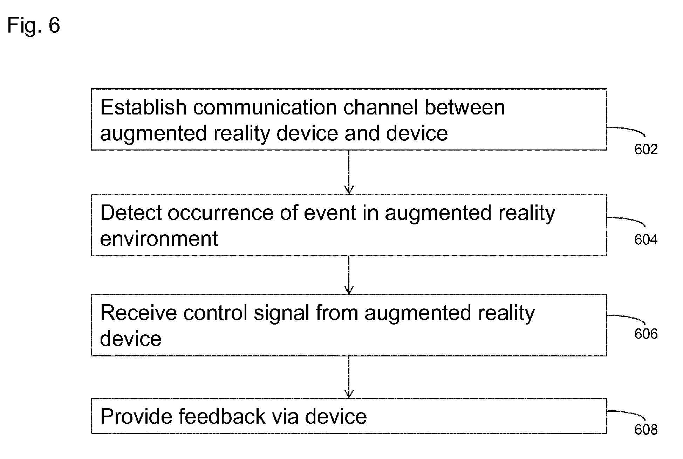

FIG. 6 illustrates a flowchart of an exemplary process of providing feedback based on an AR environment 500. The described operations of FIG. 6 and other Figures may be accomplished using some or all of the system components described in detail above and, in some implementations, various operations may be performed in different sequences. In other implementations, additional operations may be performed along with some or all of the operations shown in FIG. 6 and the other Figures. In yet other implementations, one or more operations may be performed simultaneously. In yet other implementations, one or more combinations of various operations may be performed. Some implementations may not perform all of the operations described with relation to FIG. 6 and other Figures. Accordingly, the operations described are exemplary in nature and, as such, should not be viewed as limiting.

In some embodiments, the operations of FIG. 6 and other Figures may be implemented in one or more processing devices (e.g., device 100, AR device 200, server 400, handheld device 102, and/or other devices). The one or more processing devices may include one or more devices executing some or all of the operations of FIG. 6 and other Figures in response to instructions stored electronically on an electronic storage medium. The one or more processing devices may include one or more devices configured through hardware, firmware, and/or software to be specifically designed for execution of one or more of the operations of FIG. 6 and other Figures. In an operation 602, a communication channel 300 may be established between the device 100 and the AR device 200.

In an operation 604, an occurrence of an event may be detected in the AR environment 500. One or both of the object recognition module 211 and the object generation module 212 of the processor 210 of the AR device 200 may be configured to facilitate the generation of the AR environment 500 including the AR space 510 coincident with the physical space 520. The event handler module 213 may be configured to determine an event within the AR environment 500 based on information received from one or more of the processor 210 or the imaging device 220. The event may include an interaction between the device 100 and the AR environment 500, a confirmation of an action occurring with respect to the AR environment 500, a confirmation that the device 100 is recognized by the AR device 200, an interaction between the device 100 and one or more virtual objects displayed in the AR space 510, an interaction between a user and the AR environment, and/or other occurrence in the AR environment 500.

In an operation 606, a device 100 may receive a control signal from the AR device 200. When the event handler module 213 of the AR device 200 detects an event, the control signal generation module 214 may be configured to determine a control signal associated with the detected event and communicate the control signal to the device 100 via the wired or wireless communication channel 300. The feedback control module 111 of the processor 110 may receive the control signal. The control signal may be based on the detection of the occurrence of the event in the AR environment 500.

In an operation 608, feedback may be provided via the device 100. The feedback control module 111 may cause the feedback device 120 to provide feedback via the device 100. In some implementations, the feedback control module 111 may be configured to provide the control signal to the feedback device 120. In these embodiments, the control signal may be directly applied to the feedback device 120 to cause the feedback. In some implementations, the feedback control module 111 may be configured to determine a feedback response based on the received control signal. The feedback control module 111 may provide a feedback response comprising one or more types of feedback and one or more feedback signals of the indicated feedback types to be generated. The feedback control module 111 may be configured to generate the indicated feedback signals of the feedback response and transmit the feedback signals to the respective feedback devices 120 to which the signals correspond.

One or more feedback devices 120 of the device 100 may provide feedback via the device 100. In some implementations, the feedback provided may be based on one or more feedback signals received from the feedback control module 111. The feedback may correspond to the event detected within the AR environment 500. For example, the feedback may be representative of the event.

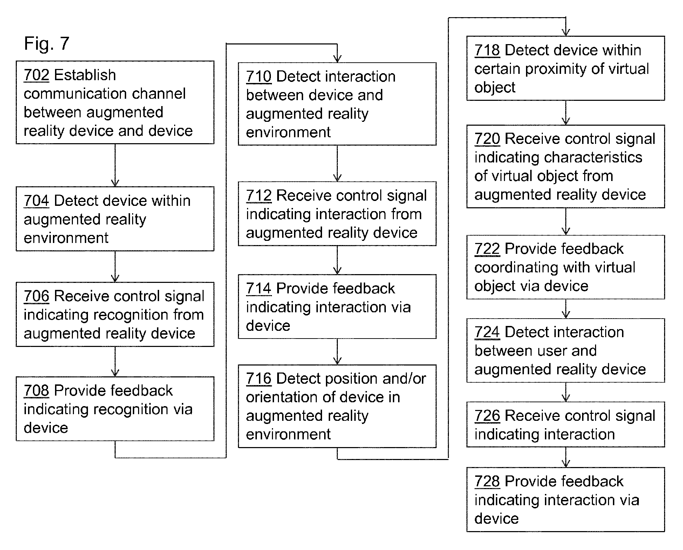

FIG. 7 illustrates a flowchart of an exemplary process of providing feedback based on an AR environment.

In an operation 702, a communication channel 300 may be established between the device 100 and the AR device 200.

In an operation 704, the device 100 may be detected within an AR environment 500 of the AR device 200. For example, the imaging device 220 of the AR device 200 may capture an image in the physical space 520 of the AR environment 500. The object recognition module 211 of the processor 210 of the AR device 200 may detect the device 100 based on image data captured by the imaging device 220. In some implementations, the device 100 may detect an object in the image and may determine whether the object is the device based on the data associated with the detected object. In some implementations, the object recognition module 211 may detect the device 100 based on an identifying indicia disposed at the device 100. In some implementations, the processor 210 of the AR device may detect the device 100 based on an identifying indicia of the device 100. The identifying indicia may comprise a visible optical signature (e.g., an optical signature that is within visible wavelengths of light) or a non-visible signature (e.g., an optical signature that is not within the visible wavelengths of light). In some implementations, an AR symbol may be disposed on a surface of the device 100. The object recognition module 211 may detect the device 100 based on the AR symbol disposed on the device 100. In some implementations, processor 210 of the AR device may detect the device 100 based on an audible signature, an infrared signature, and/or other signature emitted by the device 100.

In an operation 706, the device 100 may receive, from the AR device 200, a control signal that indicates recognition of the device 100 within the AR environment 500. When one or more of the object recognition module 211 or the processor 210 identifies the device 100 within the AR environment 500, data indicating the recognition of the device 100 may be sent to the event handler module 213. The event handler module 213 may compare the data received from the object recognition module 211 with data stored in the storage to determine whether the data is associated with an event. When some or all of the received information is associated with an event that comprises recognition of the device 100, the event handler module 213 may transmit that event data including the received information and data relating to the recognition of the device 100 to the control signal generation module 214. The control signal generation module 214 may be configured to receive the event data from the event handler module 213 and generate a control signal based on the event data for transmission to the device 100.

The feedback control module 111 of the processor 110 may receive the control signal generated by the control signal generation module 214. The control signal may indicate the detection of the occurrence of the event in the AR environment 500.

In an operation 708, feedback indicating recognition of the device 100 within the AR environment 500 may be provided via the device 100. The feedback control module 111 may cause the feedback device 120 to provide feedback via the device 100. In some implementations, the feedback control module 111 may be configured to provide the control signal to the feedback device 120. In these embodiments, the control signal may be directly applied to the feedback device 120 to cause the feedback. In some implementations, the feedback control module 111 may be configured to determine a feedback response based on the received control signal. The feedback control module 111 may be configured to generate indicated feedback signals of the feedback response and transmit the feedback signals to the respective feedback devices 120 to which the signals correspond.

Feedback may be provided via the device 100. For example, one or more feedback devices 120 of the device 100 may provide feedback via the device 100. In some implementations, the feedback provided may be based on one or more feedback signals received from the feedback control module 111. The feedback may correspond to the event detected within the AR environment 500. For example, the feedback may be representative of the recognition of the device 100 within the AR environment 500.

In an operation 710, an interaction between the device 100 and the AR environment 500 may be detected. For example, an interaction may be detected based on input received from the device 100 via the input component 150. An interaction may be detected based on a recognition of the device 100 in the AR environment 500, a movement of the device 100 in the AR environment 500, an interaction of the device 100 with a physical object 520a in the physical space 520 of the AR environment 500, an interaction of the device 100 with a virtual object 510a in the virtual space 510 of the AR environment 500, a feedback provided by the device 100 in the AR environment 500 (e.g., a visual feedback provided in the physical space 510 and/or other feedback recognizable by the AR device 200), a recognition of a user in the AR environment 500, a movement of a user in the AR environment 500, an interaction of a user with a physical object 520a in the physical space 520 of the AR environment 500, an interaction of a user with a virtual object 510a in the virtual space 510 of the AR environment, and/or another interaction between the device 100 and the AR environment 500.

In an operation 712, the device 100 may receive, from the AR device 200, a control signal indicating an interaction between the device 100 and the AR environment 500. When the AR device 200 (including, for example, object recognition module 211, event handler module 213, control signal generation module 214, and/ or other modules or devices of the AR device 200) detects an interaction between the device 100 and the AR environment 500, the AR device 200 (including, for example, the event handler module 213, the control signal generation module 214, and/or other modules or devices of the AR device 200) may generate a control signal based on the detection of the interaction for transmission to the device 100.

The feedback control module 111 of the processor 110 may receive the control signal generated by the AR device 200. The control signal may be based on the detection of the interaction between the device 100 and the AR environment 500.

In an operation 714, feedback indicating the interaction may be provided via the device 100. The feedback control module 111 may cause the feedback device 120 to provide feedback via the device 100. In some implementations, the feedback control module 111 may be configured to provide the control signal to the feedback device 120. In these embodiments, the control signal may be directly applied to the feedback device 120 to cause the feedback. In some implementations, the feedback control module 111 may be configured to determine a feedback response based on the received control signal. The feedback control module 111 may be configured to generate indicated feedback signals of the feedback response and transmit the feedback signals to the respective feedback devices 120 to which the signals correspond. Feedback may be provided via the device 100. For example, one or more feedback devices 120 of the device 100 may provide feedback via the device 100. In some implementations, the feedback provided may be based on one or more feedback signals received from the feedback control module 111. The feedback may correspond to the interaction that was detected between the device 100 and the AR environment 500. For example, the feedback may be representative of the interaction between the device 100 and the AR environment 500.

In an operation 716, a position and/or orientation of the device 100 within the AR environment 500 may be detected. In some implementations, the position/orientation device 140 of the device 100 may be configured to provide the AR device 200 with a position, an orientation, or both, via the communication channel 300. For example, the position/orientation device 140 may comprise a gyroscope, a geospatial positioning device, a compass, and/or other orienting/positioning devices. The processor 210 of the AR device 200 may be configured to determine the position of the device 100 and/or the orientation of the device 100 within the AR environment 500 based on the received position and/or orientation. In some implementations, a position indicator image and/or orientation indicator image may be disposed on the device 100. The object recognition module 211 may recognize the position indicator image and/or the orientation indicator image when recognizing that the wearable object 100 is within the view of the imaging device and/or within the physical space 510 of the AR environment 500. The position indicator image and/or the orientation indicator image data may be processed by the object recognition module 211, the event handler module 213, and/or other modules of the AR device 200 to determine a position and/or an orientation of the device 100 within the AR environment 500.

In an operation 718, the device 100 may be detected to be within a certain proximity of a virtual object in the AR environment 500. In some implementations, based on the determination of the position and/or orientation of the device 100 in the AR environment 500, the AR device 200 may determine whether the device 100 is within a certain proximity of a virtual object (e.g., virtual object 510n) in the AR environment 500.

In an operation 720, the device 100 may receive, from the AR device 200, a control signal indicating one or more characteristics of a virtual object of the AR environment 500. The device 100 may receive the control signal indicating one or more characteristics of the virtual object 510a. In some implementations, the device 100 may receive the control signal based on the detection of the device within a certain proximity of a virtual object 510a. In some implementations, the device 100 may receive the control signal separately from a detection of a position of the device 100 respective to the virtual object 510a.

In an operation 722, feedback coordinating with the virtual object may be provided via the device 100. The feedback control module 111 of the processor 110 may receive the control signal indicating one or more characteristics of the virtual object 510a. The feedback control module 111 may cause the feedback device 120 to provide feedback via the device 100 based on the one or more characteristics of the virtual object 510a. The feedback control module 111 may be configured to determine a feedback response based on the received control signal. The feedback control module 111 may be configured to generate indicated feedback signals of the feedback response and transmit the feedback signals to the respective feedback devices 120 to which the signals correspond. The feedback signals may cause the respective feedback devices 120 to provide feedback corresponding to the one or more characteristics of the virtual object 510a.

One or more feedback devices 120 of the device 100 may provide feedback via the device 100 that corresponds to the one or more characteristics of the virtual object 510a. For example, when the one or more characteristics of the virtual object 510a comprise a color, a pattern, and/or other visual characteristics, the feedback devices 120 may provide feedback of a same color, of a corresponding visual, audio and/or haptic pattern, and/or other corresponding feedback. In some implementations, the feedback devices 120 may provide feedback via a light-emitting band at a portion of the device 100. The light-emitting band may include a color, a pattern, and/or other visual characteristics that coordinate with the virtual object 510a.

In an operation 724, an interaction between a user and the AR environment 500 may be detected. For example, an interaction may be detected based on input received from the AR device 200 via the imaging device 220, the communication port 230, and/or other device. An interaction may be detected based on a recognition of a user in the AR environment 500, a movement of a user in the AR environment 500, an interaction of a user with a physical object 520a in the physical space 520 of the AR environment 500, an interaction of a user with a virtual object 510a in the virtual space 510 of the AR environment 500, a detection of a user within a certain physical proximity of a physical object 520a in the physical space 520 of the AR environment 500, a detection of a user within a certain proximity of a virtual object 510a in the virtual space 510 of the AR environment 500, and/or another interaction between the user and the AR environment 500. In some implementations, the AR device 200 (including, for example, object recognition module 211, event handler module 213, control signal generation module 214, and/ or other modules or devices of the AR device 200) may only detect interactions between users that have information associated with the device 100 and/or the AR device 200. In some implementations, the AR device 200 (including, for example, object recognition module 211, event handler module 213, control signal generation module 214, and/ or other modules or devices of the AR device 200) may detect an interaction between any user and the AR environment 500.

In an operation 726, the device 100 may receive, from the AR device 200, a control signal indicating an interaction between the user and the AR environment 500. When the AR device 200 (including, for example, object recognition module 211, event handler module 213, control signal generation module 214, and/ or other modules or devices of the AR device 200) detects an interaction between the user and the AR environment 500, the AR device 200 (including, for example, the event handler module 213, the control signal generation module 214, and/or other modules or devices of the AR device 200) may generate a control signal based on the detection of the interaction for transmission to the device 100.

The feedback control module 111 of the processor 110 may receive the control signal generated by the AR device 200. The control signal may be based on the detection of the interaction between the user and the AR environment 500.

In an operation 728, feedback indicating the interaction may be provided via the device 100. The feedback control module 111 may cause the feedback device 120 to provide feedback via the device 100. In some implementations, the feedback control module 111 may be configured to provide the control signal to the feedback device 120. In these embodiments, the control signal may be directly applied to the feedback device 120 to cause the feedback. In some implementations, the feedback control module 111 may be configured to determine a feedback response based on the received control signal. The feedback control module 111 may be configured to generate indicated feedback signals of the feedback response and transmit the feedback signals to the respective feedback devices 120 to which the signals correspond. Feedback may be provided via the device 100. For example, one or more feedback devices 120 of the device 100 may provide feedback via the device 100. In some implementations, the feedback provided may be based on one or more feedback signals received from the feedback control module 111. The feedback may correspond to the interaction that was detected between the device 100 and the AR environment 500. For example, the feedback may be representative of the interaction between the device 100 and the AR environment 500.

Although the system(s) and/or method(s) of this disclosure have been described in detail for the purpose of illustration based on what is currently considered to be the most practical and preferred implementations, it is to be understood that such detail is solely for that purpose and that the disclosure is not limited to the disclosed implementations, but, on the contrary, is intended to cover modifications and equivalent arrangements that are within the spirit and scope of the appended claims. For example, it is to be understood that the present disclosure contemplates that, to the extent possible, one or more features of any implementation can be combined with one or more features of any other implementation.

Embodiments of the present invention have been described with particular reference to the examples illustrated. However, it will be appreciated that variations and modifications may be made to the examples described within the scope of the present invention.

## Claims

1. A device configured to provide feedback based on an augmented reality environment, the device comprising:
a processor configured to:
receive a control signal from an augmented reality device that generates the augmented reality environment and is remote from the device, the control signal representative of an event occurring in the augmented reality environment; and
a feedback device configured to provide a feedback based on the received control signal.

2. The device of claim 1, wherein the feedback device comprises a haptic output device configured to provide a haptic effect, a visual device configured to provide a visual feedback, or an audio device configured to provide an audible feedback.

3. The device of claims 1 or 2, wherein the event comprises an interaction between the device and the augmented reality environment, a confirmation of an action occurring with respect to the augmented reality environment, or a confirmation that the device is recognized by the augmented reality device.

4. The device according to any preceding claim, further comprising:
a communication port configured to establish a wireless or wired communication channel with the augmented reality device, wherein the control signal is received via the wireless or wired communication channel; and,
a position or orientation device configured to provide the augmented reality device with a position, an orientation, or both via the wireless or wired communication channel.

5. The device according to any of claims 1-3, further comprising:
a communication port configured to establish a wireless or wired communication channel with the augmented reality device, wherein the control signal is received via the wireless or wired communication channel; and,
an input component configured to receive an input, wherein the processor is configured to communicate the input to the augmented reality device via the wired or wireless communication port.

6. The device according to any preceding claim, wherein the augmented reality environment comprises an augmented reality space in which one or more virtual objects are displayed, the event comprising an interaction between the device and the one or more virtual objects.

7. The device of claim 6, wherein the feedback device comprises a visual device configured to provide visual feedback, the visual device configured to generate a visual feedback at the device that coordinates with the one or more virtual objects.

8. The device according to any preceding claim, further comprising:
an augmented reality symbol disposed on a surface of the device, wherein the augmented reality symbol is used to determine an orientation of the device within the augmented reality environment.

9. The device according to any preceding claim, further comprising:
an identifier device configured to generate identifying indicia used by the augmented reality device to identify the device.

10. The device according to any preceding claim, wherein the device is configured as a ring.

11. The device of claim 10, wherein the feedback device comprises a light-emitting band disposed about the ring.

12. An augmented reality device configured to generate an augmented reality environment comprising an augmented reality space and a physical space, the augmented reality device comprising:
a communication port configured to establish a wired or wireless communication channel with a device;
an imaging device configured to image the physical space;
a processor configured to:
generate the augmented reality space coincident with the physical space;
recognize at least one physical object in the physical space and augment the at least one physical object with one or more virtual objects in the augmented reality space;
determine an event within the augmented reality environment; and
communicate a control signal representative of the event to the device via the wired or wireless communication channel, the control signal causing a feedback to be generated at the device.

13. The augmented reality device of claim 12, wherein the processor is configured to:
recognize the device when the device is moved to within a field of view of the imaging device and within the physical space.

14. The augmented reality device according to any of claims 12 or 13, wherein the control signal is representative of the recognition of the device such that the feedback to be generated at the device indicates the recognition.

15. The augmented reality device according to any of claims 12, 13 or 14, wherein the processor is configured to:
receive from the device, a position of the device, an orientation of the device, or both the position of the device and the orientation of the device; and
determine the position of the device, the orientation of the device, or both the position and the orientation of the device within the augmented reality environment based on the received position of the device, the received orientation of the device, or both the received orientation and the received position.

16. The augmented reality device according to any of claims 12, 13 or 14, wherein the processor is configured to position the device within the augmented reality environment without respect to distance between the at least one physical object and the device.

17. The augmented reality device according to any of claims 12- 16, wherein the augmented reality device is configured as an eyeglass.

18. A system of providing feedback based on an augmented reality environment, the system comprising:
a device; and
an augmented reality device comprising:
a communication port configured to establish a wired or wireless communication channel with the device;
an imaging device configured to image the physical space;
a processor configured to:
generate the augmented reality space coincident with the physical space;
recognize at least one physical object in the physical space and augment the at least one physical object with one or more virtual objects in the augmented reality space;
determine an event within the augmented reality environment; and
communicate a control signal representative of the event to the device via the wired or wireless communication channel, the control signal causing a feedback to be generated at the device,
wherein the device comprises:
a feedback device configured to provide a feedback based on the received control signal.
